# EUROPÄISCHE PATENTSCHRIFT

(11) **EP 3 999 771 B1**
(45) Veröffentlichungstag und Bekanntmachung des Hinweises auf die Patenterteilung: **01.05.2024**
(21) Anmeldenummer: 20731464.2
(22) Anmeldetag: 08.06.2020
(51) Int. Cl.: F17C 13/04

(54) **TANKVORRICHTUNG ZUR SPEICHERUNG EINES GASFÖRMIGEN MEDIUMS UND VERFAHREN ZUR HERSTELLUNG EINER TANKVORRICHTUNG**
TANK DEVICE FOR STORING A GASEOUS MEDIUM AND METHOD FOR PRODUCING A TANK DEVICE
ENSEMBLE RÉSERVOIR POUR STOCKER UN MILIEU GAZEUX ET PROCÉDÉ DE FABRICATION D'UN ENSEMBLE RÉSERVOIR

(30) Priorität: 17.07.2019 DE 102019210514
(43) Veröffentlichungstag der Anmeldung: 25.05.2022
(73) Patentinhaber: Robert Bosch GmbH, 70442 Stuttgart (DE)
(72) Erfinder: SCHAICH, Udo, 70378 Stuttgart (DE)
(86) Internationale Anmeldenummer: PCT/EP2020/065823
(87) Internationale Veröffentlichungsnummer: WO 2021/008777

(56) Entgegenhaltungen:
- WO-A1-2012/041939
- WO-A1-2020/052835
- WO-A1-2020/120074
- FR-A- 861 544
- US-A1- 2003 066 836

## Beschreibung

Die Erfindung betrifft eine Tankvorrichtung für einen Brennstoffzellentank, insbesondere zur Speicherung von Wasserstoff, beispielsweise zur Anwendung in Fahrzeugen mit Brennstoffzellenantrieb und ein Verfahren zur Herstellung einer solchen Tankvorrichtung.

### Stand der Technik

Die nicht vorveröffentlichte DE 10 2018 209 057 A1 beschreibt eine Tankvorrichtung zur Temperaturdruckentlastung eines Brennstoffzellentanks, wobei die Tankvorrichtung Tankbehälter mit verschiedenen Ventilen, wie beispielsweise ein Absperrventil, umfasst, welche eine ordentliche Funktionsweise beispielsweise eines Brennstoffzellensystems gewährleisten. Das Dokument US2003066836A1 offenbart eine Tankvorrichtung.

Die Sicherheitsvorrichtungen für solch eine Tankvorrichtung sind normiert. Dabei muss jede Tankvorrichtung solch ein Absperrventil aufweisen. So kann das Absperrventil bei einer Beschädigung der Tankvorrichtung hervorgerufen durch einen Unfall des Fahrzeugs mit Brennstoffzellenantrieb oder bei einem Bruch einer Leitung der Tankvorrichtung sicherstellen, dass die Tankbehälter geschlossen sind, da die Absperrventile im stromlosen Zustand geschlossen sind. So kann bei Unfällen und Defekten jederzeit ein Gasaustritt aus den Tankbehältern vermieden werden.

Gesetzliche Anforderungen sehen vor, dass je nach Behälter diese Sicherheitsventile direkt an oder sogar im Tankbehälter angebracht werden müssen. Somit sind die Sicherheitsventile dem gasförmigen Medium und dem Systemdruck direkt ausgesetzt, beispielsweise Systemdrücke bis zu 1000 bar. Diese hohen einwirkenden Kräfte auf die Sicherheitsventile erfordern aufwändige konstruktive Maßnahmen, um eine schnelle Alterung und somit den Ausfall der Sicherheitsventile zu verhindern.

### Vorteile der Erfindung

Das erfindungsgemäße Verfahren mit den kennzeichnenden Merkmalen des Anspruchs 1 weist demgegenüber den Vorteil auf, dass die Belastungen auf die Komponenten der Tankvorrichtung, insbesondere der Ventilvorrichtung, reduziert werden können, indem die Kraftangriffsflächen an der Ventilvorrichtung so gering wie möglich gehalten werden. Wird eine Reduzierung der Kraftangriffsfläche auf die im Tankhals eingesetzten Komponenten reduziert, führt dies auch zu einer allgemeinen Reduzierung der Kraft-Belastung auf den Tankbehälter.

Außerdem ist durch die Form des Tankbehälters, welche vergleichbar mit einer handelsüblichen Getränkeflasche ist, und der gleichmäßigen Verjüngung vom maximalen Durchmesser des zylinderförmigen Tankbehälters eine einfache Herstellung möglich.

Weiterhin ist von der Erfindung ein Verfahren zur Herstellung einer Tankvorrichtung umfasst, wobei die Tankvorrichtung zur Speicherung eines gasförmigen Mediums, insbesondere Wasserstoff, mindestens einen Tankbehälter aufweist. Der mindestens eine Tankbehälter weist ein Tankgehäuse mit einem Tankhals auf. Darüber hinaus ist in dem Tankhals ein Tankdruckboden angeordnet, welcher Tankdruckboden einen Tankhalsraum und einen Tankinnenraum voneinander trennt und welcher Tankhals ein Außengewinde als Wiederlager aufweist.

Der mindestens eine Tankbehälter ist aus Stahl gefertigt und weist eine bestimmte Schmelztemperatur auf, gekennzeichnet durch die nachfolgenden Schritte:
Erwärmung beider Enden des mindestens einen Tankbehälters bis zu der bestimmten Schmelztemperatur;
Verformung der Enden des mindestens einen Tankbehälters zu einem Tankhals mittels Formwerkzeugen;
Innere Verformung des Tankhalses mittels eines Streck- und Druckvorgangs zur Erzeugung eines doppelten Tankdruckbodens, wobei mindestens zwei Dornen gleichzeitig oder abwechselnd in den Tankhals eingebracht werden und der Tankhals so nach innen geformt wird;
Wiederholen des vorherigen Schritts bis eine vorbestimmte geometrische Form und Steifigkeit des Tankdruckbodens erreicht wird.

In vorteilhafter Weiterbildung des Verfahrens entspricht die vorbestimmte geometrische Form des Tankdruckbodens im Querschnitt einer Kreisscheibe.

Weiterhin ist von der Erfindung ein alternatives Verfahren zur Herstellung einer Tankvorrichtung umfasst, wobei der mindestens eine Tankbehälter aus Stahl gefertigt ist und eine bestimmte Schmelztemperatur aufweist, gekennzeichnet durch die nachfolgenden Schritte:
Erwärmung beider Enden des mindestens einen Tankbehälters bis zu der bestimmten Schmelztemperatur;
Verformung der Enden des mindestens einen Tankbehälters zu einem Tankhals mittels Andrücken oder Aufschrumpfen eines ebenfalls erwärmten Vollmaterials;
Einbringen beliebig gewählter Geometrien in das Vollmaterial zur Herstellung eines doppelten Tankdruckbodens in dem Tankhals.

In dem Tankdruckboden ist eine Tankdruckbodenöffnung ausgebildet. So kann in konstruktiv einfacher Weise eine Befüllung bzw. Entfüllung des Tankbehälters sichergestellt werden.

Der mindestens eine Tankbehälter ist für einen Differenzdruck von 1 bis 1000 bar gegenüber Atmosphärendruck ausgelegt. So kann die Verwendung der gasförmigen Medien in dem Tankbehälter optimiert werden.

Dabei ist der Tankhals zylinderförmig ausgebildet und geht als eine konische Erweiterung in einen zylinderförmigen Tankkörper über, wobei ein Durchmesser d des Tankhalses kleiner ist als ein Durchmesser D des Tankkörpers. Durch die Form ist eine gleichmäßige Druckverteilung innerhalb des Tankbehälters möglich. Die maximale Öffnung am Tankhals des Tankbehälters und die damit verbundene maximale Druckangriffsfläche wird typischerweise dadurch bestimmt, welche Funktion Komponenten im Tankhals erfüllen müssen und welche mechanischen Belastungen auf die Komponenten wirken und welche Dimensionierung notwendig ist. Für den Volumenstrom aus dem Tankbehälter hier ist eine kleine Öffnung erforderlich, so dass typischerweise diese Komponenten dickwandiger ausgebildet werden als für ihre Funktion notwendig. Daher wird in dieser Erfindung vorgeschlagen, einen Boden im Tankhals einzubringen, der die Kraftangriffsfläche auf die Komponenten im Tankhals reduziert, indem ein großer Teil der Druckkräfte innerhalb der Flaschenstruktur aufgenommen werden. Somit kann die druckbelastete Öffnung am Tankbehälter nur so groß dimensioniert werden, wie für die erforderlichen Volumenströme und den Vorhalt der Dichtelemente erforderlich.

In dem Tankhals des Tankbehälters ist koaxial zu der Längsachse des Tankbehälters eine Ventilvorrichtung angeordnet. So kann in konstruktiv einfacher Weise die Ventilvorrichtung als Sicherheitsventil in den Tankbehälter integriert werden, wobei die Ventilvorrichtung vor Beschädigungen, hervorgerufen durch äußere Einflüsse wie beispielsweise Stöße während des Betriebs, geschützt ist.

Die beschriebene Tankvorrichtung eignet sich vorzugsweise in einer Brennstoffzellenanordnung zur Speicherung von Wasserstoff für den Betrieb einer Brennstoffzelle. Vorzugsweise kann die beschriebene Tankvorrichtung in einem Fahrzeug mit Brennstoffzellenantrieb verwendet werden.

### Zeichnungen

In der Zeichnung sind Ausführungsbeispiele einer Tankvorrichtung zur Speicherung eines gasförmigen Mediums, insbesondere Wasserstoff, dargestellt. Es zeigt in
Fig. 1 ein Ausführungsbeispiel einer Tankvorrichtung mit einem Tankbehälter, umfassend ein Tankgehäuse mit Tankhals und Tankkörper im Längsschnitt,
Fig. 2 ein vergrößerter Ausschnitt des Ausführungsbeispiels aus der Fig. 1 im Bereich des Tankhalses,
Fig. 3 ein vergrößerter Ausschnitt des Ausführungsbeispiels aus der Fig. 1 im Bereich des Tankhalses mit einer Ventilvorrichtung.
Fig. 4 Ablaufplan eines erfindungsgemäßen Verfahrens zur Herstellung einer erfindungsgemäßen Tankvorrichtung,
Fig. 5 Ablaufplan eines alternativen erfindungsgemäßen Verfahrens zur Herstellung einer erfindungsgemäßen Tankvorrichtung.

### Beschreibung des Ausführungsbeispiels

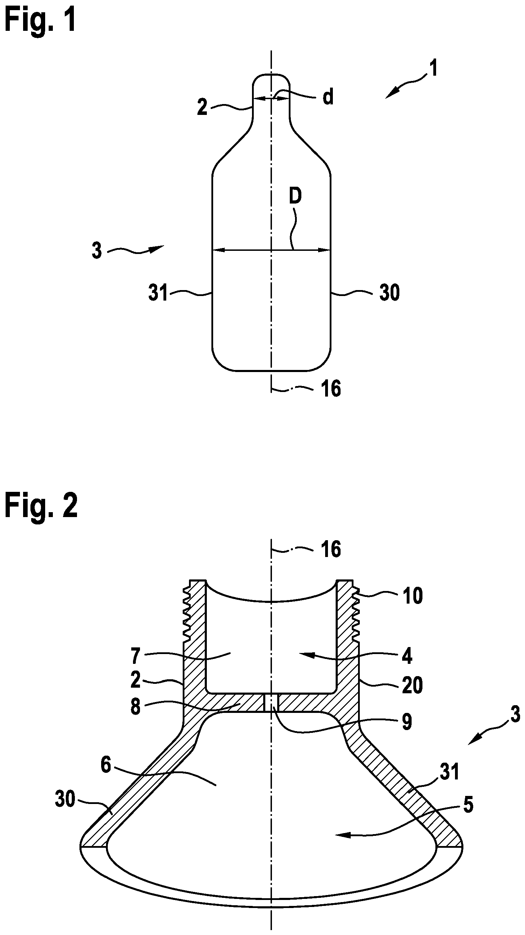

In der **Fig.1** ist ein Ausführungsbeispiel einer Tankvorrichtung 1 für ein gasförmiges Medium, insbesondere Wasserstoff, in schematischer Ansicht gezeigt. Die Tankvorrichtung 1 weist einen Tankbehälter 3 mit einem Tankgehäuse 30 auf. Das Tankgehäuse 30 umfasst einen Tankkörper 31 und einen Tankhals 2. Dabei ist der Tankkörper 31 als konische Erweiterung des Tankhalses 2 ausgebildet. Sowohl der Tankkörper 31 als auch der Tankhals 2 sind zylinderförmig ausgebildet, wobei der Durchmesser D des Tankkörpers 31 größer ist als der Durchmesser d des Tankhalses 2. Die Form ist daher vergleichbar mit einer handelsüblichen Getränkeflasche.

**Fig.2** zeigt eine vergrößerte Ansicht des Tankbehälters 3 im Bereich des Tankhalses 2 mit einer Längsachse 16 aus der **Fig.1** im Querschnitt. Der Tankhals 2 weist innerhalb des Tankbehälters 3 an einem Ende in Richtung der konischen Erweiterung des Tankbehälters 3 zu dem Tankkörper 31 einen doppelten Tankdruckboden 8 auf, welcher im Querschnitt einer Kreisscheibe entspricht. Der Tankdruckboden 8 weist weiterhin eine Tankdruckbodenöffnung 9 auf.

In dem Tankkörper 31 ist ein Tankinnenraum 6 ausgebildet, welcher über die Tankdruckbodenöffnung 9 in einen Tankhalsraum 7, ausgebildet in dem Tankhals 2, mündet.

Weiterhin weist der Tankhals 2 an einer Außenseite 20 ein Außengewinde 10 als Wiederlager auf, welches zur Befestigung weiterer Anbaukomponenten der Tankvorrichtung 1 verwendet werden kann, beispielsweise zur Befestigung einer Ventilvorrichtung.

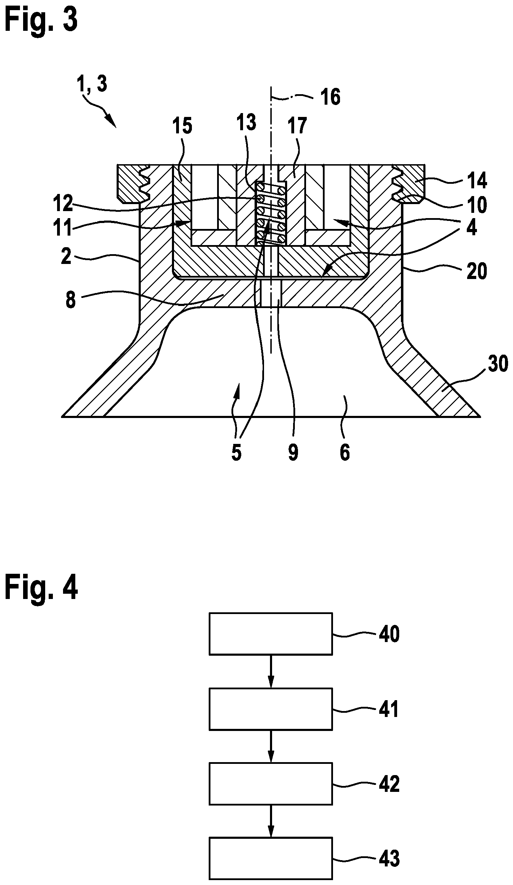

**Fig.3** zeigt eine vergrößerte Ansicht des Tankbehälters 3 im Bereich des Tankhalses 2 aus der **Fig.1** im Querschnitt. Hier ist in dem Tankhals 2 eine Ventilvorrichtung 11 koaxial zu der Längsachse 16 angeordnet. Die Ventilvorrichtung 11 weist ein Ventilgehäuse 15 auf, mit welchem die Ventilvorrichtung 11 in dem Tankbehälter 3 fest integriert ist. Diese feste Integrierung erfolgt mittels eines Ventilbefestigungselements 14, das außen an dem Außengewinde 10 des Tankhalses 2 angeschraubt wird. Das Ventilbefestigungselement 14 ist dabei fest mit der Ventilvorrichtung 11 verbunden.

Weiterhin weist die Ventilvorrichtung 11 eine Ventilfeder 12 auf, welche ein Ventilelement 17 mit einer Kraft vorspannt, so dass die Ventilvorrichtung 11 und damit eine in dem Ventilgehäuse 15 ausgebildete Ventildurchgangsöffnung 13 geschlossen ist. Wird ein Elektromagnet der Ventilvorrichtung 11 bestromt, so kann diese geöffnet werden, so dass gasförmiges Medium, insbesondere Wasserstoff, aus dem Tankbehälter 3 in Richtung beispielsweise eines Anodenbereichs einer Brennstoffzelle strömen kann.

Der Tankdruckboden 8 trennt den Tankinnenraum 6 von dem Tankhalsraum 7, welcher als Einbauraum für Sicherheitskomponenten, wie beispielsweise die Ventilvorrichtung 11, dient. Dabei ist ein Niederdruckbereich 4 zwischen der Ventilvorrichtung 11 und dem Tankhalsraum 7 und im Bereich einer Ansteuerung der Ventilvorrichtung, dem Elektromagneten, ausgebildet. Im Tankinnenraum 6 und der Ventildurchgangsöffnung 13 der Ventilvorrichtung 11 ist ein Hochdruckbereich 5 ausgebildet.

Der Tankbehälter 3 ist für einen Differenzdruck von 1 bar bis 1000 bar gegenüber Atmosphärendruck ausgelegt. Typischerweise werden beispielsweise bei Brennstoffzellenanordnungen Tankbehälter 3 verwendet, welche Wasserstoff mit einem Druck von bis zu 700 bar speichern. Außerdem ist der Tankbehälter aus einem Kunststoffwerkstoff, Kohlefaserwerkstoff oder Stahl hergestellt.

Die Tankvorrichtung 1 ist hier nicht auf einen Tankbehälter 3 beschränkt. Diese kann eine Vielzahl von den oben beschriebenen Tankbehältern 3 aufweisen und beispielsweise in ein Fahrzeug mit Brennstoffzellenantrieb integriert werden. Außerdem ist die Form des Tankbehälters 3 nicht auf die oben beschriebene Form einer handelsüblichen Getränkeflasche beschränkt, sondern kann je nach Bedarf beliebige Geometrien annehmen.

Im Folgenden wird, wie ein Ablaufplan in der **Fig.4** zeigt, ein Verfahren zur Herstellung einer oben beschriebenen Tankvorrichtung 1, welche aus Stahl gefertigt ist und eine bestimmte Schmelztemperatur aufweist, beschrieben:
Beide Enden des Tankbehälters 3 werden bis zu einer bestimmten Schmelztemperatur, abhängig je nach Wahl des Stahl-Werkstoffs, erwärmt (Erwärmen 40). Danach werden die Enden des Tankbehälters 3 mittels Formwerkzeugen zu dem Tankhals 2 hin verformt (Verformen 41). Im nächsten Schritt erfolgt ein inneres Verformen 42 des Tankhalses 2 mittels eines Streck- und Druckvorgangs zur Erzeugung des doppelten Tankdruckbodens 8, wobei mindestens zwei Dornen gleichzeitig oder abwechselnd in den Tankhals 2 eingebracht werden und so eine inneres Verformen 42 des Tankhalses 2 erzielt wird.

Dieser Schritt wird so lange wiederholt bis eine vorbestimmte geometrische Form und Steifigkeit erreicht wird (Wiederholen 43). Beispielsweise entspricht die geometrische Form des Tankdruckbodens 8 in den Ausführungen der **Fig.1, Fig.2** und **Fig.3** im Querschnitt einer Kreisscheibe.

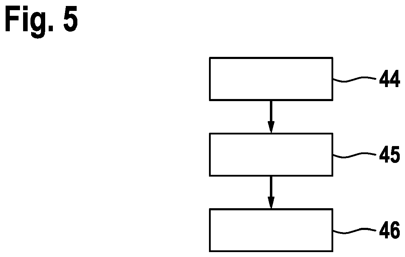

Ein Ablaufplan eines alternativen Verfahrens zur Herstellung einer oben beschriebenen Tankvorrichtung 1, welche aus Stahl gefertigt ist und eine bestimmte Schmelztemperatur aufweist, wird in **Fig.5** gezeigt:
Beide Enden des Tankbehälters 3 werden bis zu einer bestimmten Schmelztemperatur, abhängig je nach Wahl des Stahl-Werkstoffs, erwärmt (Erwärmen 44). Anschließend werden die Enden des Tankbehälters 3 zu dem Tankhals 2 mittels Andrücken oder Aufschrumpfen eines ebenfalls erwärmten Vollmaterials verformt (Verformen 45). Durch Einbringen 46 beliebig gewählter Geometrien in das Vollmaterial kann entsprechend die Geometrie des Tankdruckbodens 8 hergestellt werden.

Beide Verfahren haben zum Ziel, ein gleichmäßiges Materialgefüge zu erhalten, um Schädigungen durch den Einsatz beispielsweise unter Wasserstoff oder anderen Einflüssen bzw. sonstigen Beschädigungen im Betrieb auszuschließen.

Wärmebehandlungen und sonstige materialwissenschaftliche Prozesse können jederzeit beispielsweise während der Verarbeitung oder in nachfolgenden Schritten eingesetzt werden.

## Patentansprüche

1. Verfahren zur Herstellung einer Tankvorrichtung (1) zur Speicherung eines gasförmigen Mediums, insbesondere Wasserstoff, mit mindestens einem Tankbehälter (3), welcher mindestens einen Tankbehälter (3) ein Tankgehäuse (30) mit einem Tankhals (2) aufweist, wobei in dem Tankhals (2) ein Tankdruckboden (8) angeordnet ist, welcher Tankdruckboden (8) einen Tankhalsraum (7) und einen Tankinnenraum (6) voneinander trennt und welcher Tankhals (2) an einer Außenseite (20) ein Außengewinde (10) als Wiederlager aufweist, wobei der mindestens eine Tankbehälter (3) aus Stahl gefertigt ist und eine bestimmte Schmelztemperatur aufweist, **gekennzeichnet durch** die nachfolgenden Schritte:
a. Erwärmen (40) beider Enden des mindestens einen Tankbehälters (3) bis zu der bestimmten Schmelztemperatur;
b. Verformen (41) der Enden des mindestens einen Tankbehälters (3) zu einem Tankhals (2) mittels Formwerkzeugen;
c. Inneres Verformen (42) des Tankhalses (2) mittels eines Streck- und Druckvorgangs zur Erzeugung eines doppelten Tankdruckbodens (8), wobei mindestens zwei Dornen gleichzeitig oder abwechselnd in den Tankhals (2) eingebracht werden und der Tankhals (2) so nach innen geformt wird;
d. Wiederholen (43) des Schritts c, bis eine vorbestimmte geometrische Form und Steifigkeit des Tankdruckbodens (8) erreicht wird.

2. Verfahren nach Anspruch 1, **dadurch gekennzeichnet, dass** die vorbestimmte geometrische Form des Tankdruckbodens (8) im Querschnitt einer Kreisscheibe entspricht.

3. Verfahren zur Herstellung einer Tankvorrichtung (1) zur Speicherung eines gasförmigen Mediums, insbesondere Wasserstoff, mit mindestens einem Tankbehälter (3), welcher mindestens einen Tankbehälter (3) ein Tankgehäuse (30) mit einem Tankhals (2) aufweist, wobei in dem Tankhals (2) ein Tankdruckboden (8) angeordnet ist, welcher Tankdruckboden (8) einen Tankhalsraum (7) und einen Tankinnenraum (6) voneinander trennt und welcher Tankhals (2) an einer Außenseite (20) ein Außengewinde (10) als Wiederlager aufweist, wobei der mindestens eine Tankbehälter (3) aus Stahl gefertigt ist und eine bestimmte Schmelztemperatur aufweist, **gekennzeichnet durch** die nachfolgenden Schritte:
a. Erwärmen (44) beider Enden des mindestens einen Tankbehälters (3) bis zu der bestimmten Schmelztemperatur;
b. Verformen (45) der Enden des mindestens einen Tankbehälters (3) zu einem Tankhals (2) mittels Andrücken oder Aufschrumpfen eines ebenfalls erwärmten Vollmaterials;
c. Einbringen (46) beliebig gewählter Geometrien in das Vollmaterial zur Herstellung eines doppelten Tankdruckbodens (8) in dem Tankhals (2).

4. Fahrzeug mit Brennstoffzellenantrieb und einer Tankvorrichtung (1) hergestellt nach dem Verfahren nach Anspruch 1 oder 2 oder hergestellt nach dem Verfahren nach Anspruch 3.

5. Brennstoffzellenanordnung mit einer Tankvorrichtung (1) hergestellt nach dem Verfahren nach Anspruch 1 oder 2 oder hergestellt nach dem Verfahren nach Anspruch 3.

## Claims

1. Method for producing a tank device (1) for storing a gaseous medium, in particular hydrogen, having at least one tank container (3), which at least one tank container (3) has a tank housing (30) with a tank neck (2), wherein a tank pressure base (8) is disposed in the tank neck (2), which tank pressure base (8) separates a tank neck space (7) and a tank interior (6) from one another, and which tank neck (2) has an external thread (10) as an abutment on an outer side (20), wherein the at least one tank container (3) is manufactured from steel and has a specific melting temperature, **characterized by** the following steps:
a. heating (40) both ends of the at least one tank container (3) up to the specific melting temperature;
b. deforming (41) the ends of the at least one tank container (3) to produce a tank neck (2) by means of moulding tools;
c. internally deforming (42) the tank neck (2) by means of a stretching and compressing process to produce a double tank pressure base (8), wherein at least two mandrels are introduced simultaneously or alternately into the tank neck (2), and the tank neck (2) is thus shaped inwardly;
d. repeating (43) step c until a predetermined geometrical shape and rigidity of the tank pressure base (8) is reached.

2. Method according to Claim 1, **characterized in that** the predetermined geometrical shape of the tank pressure base (8) corresponds in cross section to a circular disc.

3. Method for producing a tank device (1) for storing a gaseous medium, in particular hydrogen, having at least one tank container (3), which at least one tank container (3) has a tank housing (30) with a tank neck (2), wherein a tank pressure base (8) is disposed in the tank neck (2), which tank pressure base (8) separates a tank neck space (7) and a tank interior (6) from one another, and which tank neck (2) has an external thread (10) as an abutment on an outer side (20), wherein the at least one tank container (3) is manufactured from steel and has a specific melting temperature, **characterized by** the following steps:
a. heating (44) both ends of the at least one tank container (3) up to the specific melting temperature;
b. deforming (45) the ends of the at least one tank container (3) to produce a tank neck (2) by means of pressing or shrinking a likewise heated solid material thereon;
c. introducing (46) any selected geometries into the solid material in order to produce a double tank pressure base (8) in the tank neck (2).

4. Vehicle having a fuel cell drive and a tank device (1) produced according to the method according to Claim 1 or 2, or produced according to the method according to Claim 3.

5. Fuel cell assembly having a tank device (1) produced according to the method according to Claim 1 or 2, or produced according to the method according to Claim 3.

## Revendications

1. Procédé de fabrication d'un dispositif de réservoir (1) pour le stockage d'un milieu gazeux, notamment d'hydrogène, avec au moins un récipient de réservoir (3), lequel au moins un récipient de réservoir (3) présente un corps de réservoir (30) avec un col de réservoir (2), un fond de pression de réservoir (8) étant agencé dans le col de réservoir (2), lequel fond de pression de réservoir (8) sépare l'un de l'autre un espace de col de réservoir (7) et un espace intérieur de réservoir (6) et lequel col de réservoir (2) présente sur un côté extérieur (20) un filetage extérieur (10) en tant que contre-appui, l'au moins un récipient de réservoir (3) étant fabriqué en acier et présentant une température de fusion déterminée, **caractérisé par** les étapes suivantes :
a. le chauffage (40) des deux extrémités de l'au moins un récipient de réservoir (3) jusqu'à la température de fusion déterminée ;
b. la déformation (41) des extrémités de l'au moins un récipient de réservoir (3) en un col de réservoir (2) au moyen d'outils de formage ;
c. la déformation intérieure (42) du col de réservoir (2) au moyen d'une opération d'étirage et de compression pour créer un fond de pression de réservoir double (8), au moins deux mandrins étant introduits simultanément ou alternativement dans le col de réservoir (2) et le col de réservoir (2) étant ainsi formé vers l'intérieur ;
d. la répétition (43) de l'étape C jusqu'à ce qu'une forme géométrique et une rigidité prédéterminées du fond de pression de réservoir (8) soient obtenues.

2. Procédé selon la revendication 1, **caractérisé en ce que** la forme géométrique prédéterminée du fond de pression de réservoir (8) correspond en section transversale à un disque circulaire.

3. Procédé de fabrication d'un dispositif de réservoir (1) pour le stockage d'un milieu gazeux, notamment d'hydrogène, avec au moins un récipient de réservoir (3), lequel au moins un récipient de réservoir (3) présente un corps de réservoir (30) avec un col de réservoir (2), un fond de pression de réservoir (8) étant agencé dans le col de réservoir (2), lequel fond de pression de réservoir (8) sépare l'un de l'autre un espace de col de réservoir (7) et un espace intérieur de réservoir (6) et lequel col de réservoir (2) présente sur un côté extérieur (20) un filetage extérieur (10) en tant que contre-appui, l'au moins un récipient de réservoir (3) étant fabriqué en acier et présentant une température de fusion déterminée, **caractérisé par** les étapes suivantes :
a. le chauffage (44) des deux extrémités de l'au moins un récipient de réservoir (3) jusqu'à la température de fusion déterminée ;
b. la déformation (45) des extrémités de l'au moins un récipient de réservoir (3) en un col de réservoir (2) en pressant ou en rétrécissant un matériau plein également chauffé ;
c. l'incorporation (46) de géométries choisies arbitrairement dans le matériau plein pour produire un fond de pression de réservoir double (8) dans le col de réservoir (2).

4. Véhicule avec un entraînement par pile à combustible et un dispositif de réservoir (1) fabriqué par le procédé selon la revendication 1 ou 2 ou fabriqué par le procédé selon la revendication 3.

5. Agencement de pile à combustible avec un dispositif de réservoir (1) fabriqué par le procédé selon la revendication 1 ou 2 ou fabriqué par le procédé selon la revendication 3.
